# EUROPÄISCHE PATENTSCHRIFT

(11) **EP 3 688 293 B1**
(45) Veröffentlichungstag und Bekanntmachung des Hinweises auf die Patenterteilung: **15.01.2025**
(21) Anmeldenummer: 18755170.0
(22) Anmeldetag: 08.08.2018
(51) Int. Cl.: F02B 23/06

(54) **VERBRENNUNGSMOTOR**
COMBUSTION ENGINE
MOTEUR A COMBUSTION

(30) Priorität: 26.09.2017 DE 102017216996
(43) Veröffentlichungstag der Anmeldung: 05.08.2020
(73) Patentinhaber: Bayerische Motoren Werke Aktiengesellschaft, 80809 München (DE)
(72) Erfinder: BRACK, Wolfgang, 80538 München (DE); SCHWARZMÜLLER, Florian, 85716 Unterschleissheim (DE); SUCKART, Dominik, 81541 München (DE); HIERETH, Alexander, 80995 Muenchen (DE); KLEES, Timo, 85241 Hebertshausen (DE); SCHÄFER, Lukas, 80797 München (DE)
(86) Internationale Anmeldenummer: PCT/EP2018/071538
(87) Internationale Veröffentlichungsnummer: WO 2019/063178

(56) Entgegenhaltungen:
- EP-A1- 3 617 473
- WO-A1-2016/070291
- DE-A1- 102014 009 993
- JP-A- 2001 059 422
- US-A1- 2005 109 328
- US-B1- 6 502 540

## Beschreibung

Die vorliegende Erfindung betrifft einen Verbrennungsmotor für ein Kraftfahrzeug.

Ein Verbrennungsmotor weist üblicherweise wenigstens einen Zylinder, einen Zylinderkopf und einen in dem Zylinder beweglich gelagerten Kolben auf. Diese Elemente begrenzen zusammen einen Brennraum des Verbrennungsmotors, in dem ein Gemisch verbrannt wird, das mindestens aus Luft und Kraftstoff besteht.

Während eines Verbrennungsprozesses bewegt sich der Kolben zwischen einem oberen Maximalpunkt und einem unteren Maximalpunkt auf und ab, die auch als oberer und unterer Totpunkt bezeichnet werden. Bei einer Aufwärtsbewegung des Kolbens, insbesondere einer Bewegung des Kolbens in Richtung des Zylinderkopfes, kann das Gemisch im Brennraum verdichtet werden. Wenn der Kolben den oberen Totpunkt erreicht hat, entzündet eine in dem Zylinderkopf angeordnete Zündkerze durch Erzeugen einer Initialflamme das Gemisch.

Um eine möglichst schnelle und effiziente Verbrennung des Gemisches zu erreichen, ist es von Vorteil, wenn das Gemisch eine möglichst hohe turbulente kinetische Energie (TKE) aufweist. Die turbulente kinetische Energie ergibt sich aus dem Strömungsverhalten des Gemisches und wird maßgeblich durch die Geometrie des Brennraums beeinflusst.

Die WO 2016/070291 A1 beschreibt eine Brennkammergeometrie, wobei in einem Brennraumdach der Brennkammer Wölbungen vorgesehen sind, die sich in einen Bereich zwischen einem Einlassventilsitz und einem Auslassventilsitz hinein erstrecken.

Die JP 2001059422 A offenbart einen Verbrennungsmotor, wobei ein Brennraumdach eines Brennraums mit Quetschflächen versehen ist.

Die DE 10 2014 009 993 A1 beschreibt ein Bauteil für eine Verbrennungskraftmaschine, das durch ein hochfestes Material verstärkt ist, welches mittels Laserschweißens aufgebracht ist.

Die EP 3 617 473 A1 offenbart eine Geometrie einer Brennkammer für einen Motor, der durch eine Bodenfläche eines Kolbens und ein Brennraumdach begrenzt ist, wobei im Brennraumdach Quetschflächen vorgesehen sind.

Die US 6,502,540 B1 beschreibt ebenfalls eine Geometrie einer Brennkammer für einen Motor, wobei in einem Brennraumdach parabolisch gewölbte Bereiche vorgesehen sind.

Es ist daher eine Aufgabe der vorliegenden Erfindung, einen Verbrennungsmotor für ein Kraftfahrzeug mit einem optimierten Brennraum anzugeben.

Diese Aufgabe wird erfindungsgemäß gelöst durch einen Verbrennungsmotor für ein Kraftfahrzeug, mit wenigstens einem Zylinder, einem Zylinderkopf und einem in dem Zylinder beweglich gelagerten Kolben, der eine Brennraumseite hat, die mit dem Zylinderkopf und dem Zylinder einen Brennraum begrenzt, wobei der Zylinderkopf ein Brennraumdach aufweist, in dem mindestens zwei Ventilsitze für mindestens ein Einlassventil und mindestens ein Auslassventil vorgesehen sind, und wobei das Brennraumdach zwei zwischen jeweils einem Ventilsitz für ein Einlassventil und einem Ventilsitz für ein Auslassventil angeordnete, vom Brennraum weg gerichtete, gewölbte Zylinderkopfabschnitte aufweist. Der Zylinderkopf weist lediglich an zwei sich gegenüberliegenden Randabschnitten Quetschflächen in Form von Kreisflächenabschnitten auf, wobei die Quetschflächen jeweils durch eine von zwei parallel zueinander verlaufenden Übergängen im Zylinderkopf begrenzt werden, und wobei die Quetschflächen einer Einlassseite und einer Auslassseite des Zylinderkopfs zugeordnet sind, wobei die der Einlassseite zugeordnete Quetschfläche eine größere Fläche aufweist als die der Auslassseite zugeordnete Quetschfläche.

Durch die gewölbten, vom Brennraum weg gerichteten Zylinderkopfabschnitte kann das Brennraumdach eine annähernd halbkugelförmige Geometrie aufweisen. Dadurch kann eine besonders vorteilhafte Brennraumgeometrie seitens des Zylinderkopfes erreicht werden. Aufgrund dessen lässt sich das Strömungsverhalten des Gemisches beim Ansaugprozess vorteilhaft beeinflussen.

Insbesondere ergibt sich eine hinsichtlich des Verbrennungsprozesses besonders günstige, insbesondere kugelförmige, Gestalt des Brennraums. Die beiden gewölbten Zylinderkopfabschnitte liegen somit beide zwischen der Ein-und der Auslassseite des Zylinderkopfes, sodass sie beide einen in etwa gleichen Anteil an der Verbesserung des Strömungsverhaltens haben.

Gemäß einer Ausführungsform ist ein aktiver Bereich des Brennraumdachs weitestgehend kantenfrei ausgebildet. Der aktive Bereich des Brennraumdachs ist der Bereich, der im Wesentlichen die halbkugelförmige Geometrie des Brennraumdachs ausmacht. Durch die kantenfreie Ausbildung des Brennraumdachs wird insbesondere die Tumbleströmung des Gemisches nicht gestört. Die turbulente kinetische Energie des Luft-Kraftstoff-Gemischs kann somit während der Kompression erzeugt und optimal aufrechterhalten werden.

Durch die hohe turbulente kinetische Energie lässt sich eine hohe Brenngeschwindigkeit erreichen, sodass sich eine Initialflamme besonders schnell im Gemisch ausbreiten kann. Die hohe Brenngeschwindigkeit führt zudem dazu, dass ein sich während eines Verbrennungszyklus im Brennraum befindliches Gemisch möglichst vollständig verbrannt wird und nahezu kein unverbrannter Kraftstoff im Brennraum verbleibt.

Insgesamt werden mit dem erfindungsgemäßen Verbrennungsmotor ein besonders guter thermodynamischer Wirkungsgrad und ein reduzierter Verbrauch erreicht.

Das Brennraumdach ist vorzugsweise vollständig spanend hergestellt worden. Dadurch ist die Reproduzierbarkeit des Brennraumdachs verbessert, da eine spanende Bearbeitung geringeren Fertigungstoleranzen unterliegt als ein Gießprozess. Insbesondere ist hierdurch der weitestgehend kantenfreie aktive Bereich, der wiederum die halbkugelförmige Geometrie zur Folge hat, mit geringen Streuungen darstellbar.

Der Kolben weist vorzugsweise eine zu einer Kolbenachse rotationssymmetrische, insbesondere linsenförmige, Vertiefung auf, wobei ein Durchmesser der Vertiefung kleiner ist als ein Gesamtdurchmesser des Kolbens. Die Vertiefung lässt zu, dass sich eine Strömung optimal entwickelt, um (bereits beim Einströmen) eine Tumblebewegung im Brennraum zu generieren. Insofern unterstützt die Vertiefung die Aufrechterhaltung der turbulenten kinetischen Energie zum Zeitpunkt der Verbrennung. Die Vertiefung hat zudem ebenso wie das Brennraumdach einen Einfluss auf den Brennraum und somit auf das Verdichtungsverhältnis des Verbrennungsmotors.

Die Vertiefung des Kolbens weist in ihrem Mittelpunkt vorzugsweise eine Tiefe zwischen 0,2 mm und 10 mm auf, insbesondere zwischen 0,5 mm und 8 mm. Diese Tiefe hat sich als besonders vorteilhaft hinsichtlich der Ladungsbewegung und Flammenausbreitung herausgestellt. Üblicherweise wird die Tiefe der Vertiefung in Kombination mit dem Brennraumdach entsprechend einem vorgegebenen Verdichtungsverhältnis des Verbrennungsmotors festgelegt. Das Verdichtungsverhältnis entspricht dem Verhältnis des gesamten Brennraums vor der Verdichtung, wenn sich der Kolben in dem unteren Totpunkt befindet, zum verbliebenen Raum nach der Verdichtung, wenn sich der Kolben im oberen Totpunkt befindet.

Eine projizierte Fläche der Vertiefung hat an der Stirnseite, also der Brennraumseite, des Kolbens vorzugsweise einen Flächenanteil von 70 % bis 80 % des Kolbens. Diese Geometrie gewährleistet einen entsprechend hohen flächenmäßigen Anteil der Vertiefung und deren Einfluss auf den gesamten Brennraum entsprechend.

Die Vertiefung kann zusammen mit dem Brennraumdach, insbesondere mit dem aktiven Bereich des Brennraumdachs, ein annähernd kugelförmiges Volumen einschließen, das als Brennraum dient. Dies begünstigt die Flammenausbreitung im Brennraum, was zu einer besonders effizienten Verbrennung führt.

Die Zündkerze ist vorzugsweise außermittig im Zylinderkopf angeordnet. Dies ist bedingt durch den Aufbau des Brennraums, insbesondere durch die Anordnung von Ventilen im Zylinderkopf und durch die Anordnung eines Injektors. Wenn Luft oder ein Gemisch, das zumindest Luft und Kraftstoff umfasst, über ein Einlassventil in den Brennraum einströmt, wird es üblicherweise in Richtung der Auslassseite des Brennraums beschleunigt.

Eine geringe Strömungsgeschwindigkeit im Bereich der Zündkerze ist vorteilhaft, da sich eine Initialflamme bei einer geringen Strömungsgeschwindigkeit besonders gut ausbreiten kann. Sofern die Strömungsgeschwindigkeit zu hoch ist, kann der Zündfunke verweht und die entsprechende Flamme gelöscht werden, wodurch das Gemisch unzureichend oder gar nicht entflammt werden würde, was die Effizienz des Verbrennungsprozesses negativ beeinflusst.

Der Kolben weist vorzugsweise an seiner Brennraumseite zum Zylinderkopf korrespondierende Kolbenquetschflächen auf. Insbesondere weist der Kolben zwei Kolbenquetschflächen auf, die sich in Bezug auf eine Längsachse des Kolbens radial gegenüberliegen. In einer alternativen Ausführungsform können die Kolbenquetschflächen kleiner sein als die Quetschflächen des Zylinderkopfes. Dies entspricht einem vergrößerten Durchmesser der Vertiefung.

Die Kolbenquetschflächen sind vorzugsweise teilkreisförmig ausgebildet, insbesondere kreisabschnittförmig beziehungsweise bogenförmig.

Die der Auslassseite des Zylinderkopfes zugeordnete Kolbenquetschfläche entspricht hinsichtlich der Flächengröße annähernd der entsprechenden Quetschfläche des Zylinderkopfes. Die der Einlassseite des Zylinderkopfes zugeordnete Kolbenquetschfläche kann flächenmäßig kleiner ausgebildet sein als die entsprechende Quetschfläche des Zylinderkopfes.

Vorzugsweise ist im Brennraumdach neben einem Ventilsitz eine Maskierung parallel zur Ventilachse des Einlassventils angeordnet, die eine Höhe zwischen 2 mm und 3,5 mm aufweist. Mittels der Maskierung wird erreicht, dass sich insbesondere bei kleinen Ventilhüben eine Überströmung der Einlassventile ergibt, was eine Tumble-Bewegung des Gemisches zur Folge hat. Durch die Tumble-Bewegung wird das Turbulenzniveau erhöht.

Der Kolben weist vorzugsweise an seiner Brennraumseite mindestens zwei als Ventiltaschen ausgebildete Aussparungen auf. Die Ventiltaschen dienen als mechanische Absicherung, um eine Kollision zwischen Ventil und Kolben zu vermeiden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 schematisch einen erfindungsgemäßen Verbrennungsmotor,
- Figur 2 ein Brennraumvolumen eines erfindungsgemäßen Verbrennungsmotors,
- Figur 3 einen Kolben eines erfindungsgemäßen Verbrennungsmotors in einer Schnittansicht,
- Figur 4 den Kolben aus Figur 3 in einer Perspektivansicht, und
- Figur 5 den Brennraum eines erfindungsgemäßen Verbrennungsmotors in einer Draufsicht, wobei der dem Brennraum zugeordnete Kolben transparent dargestellt ist.

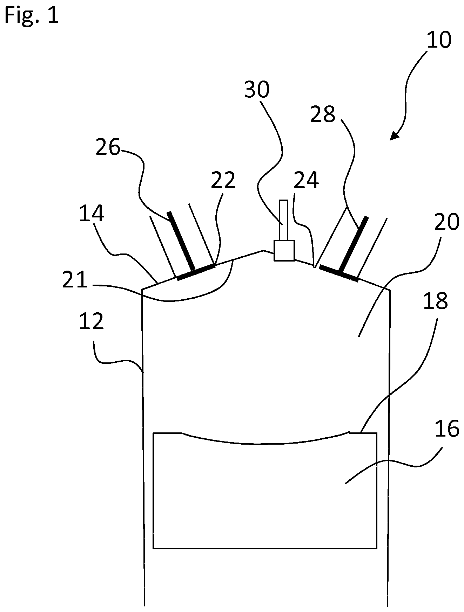

Figur 1 zeigt schematisch einen Verbrennungsmotor 10 mit einem Zylinder 12, einem Zylinderkopf 14 und einem im Zylinder 12 beweglich gelagerten Kolben 16.

Der Kolben 16 hat eine Brennraumseite 18, die zusammen mit dem Zylinderkopf 14 und dem Zylinder 12 einen Brennraum 20 des Verbrennungsmotors 10 begrenzt, wobei der Zylinderkopf 14 ein zum Brennraum 20 hin gerichtetes Brennraumdach 21 aufweist. Im Zylinderkopf 14, insbesondere im Brennraumdach 21, sind Ventilsitze 22, 24 für mindestens ein Einlassventil 26 bzw. Auslassventil 28 sowie eine Zündkerze 30 angeordnet. Die Zündkerze 30 ist insbesondere außermittig angeordnet.

Die in Figur 1 schematisch dargestellten Elemente werden in den nachfolgenden Figuren detailliert erläutert.

Die allgemeine Funktionsweise von Verbrennungsmotoren ist aus dem Stand der Technik hinreichend bekannt, daher soll an dieser Stelle nicht weiter darauf eingegangen werden, da es nachfolgend auf die Geometrie des Zylinderkopfs 14 ankommt, insbesondere die Geometrie der zum Brennraum 20 gerichteten Seite des Zylinderkopfs 14.

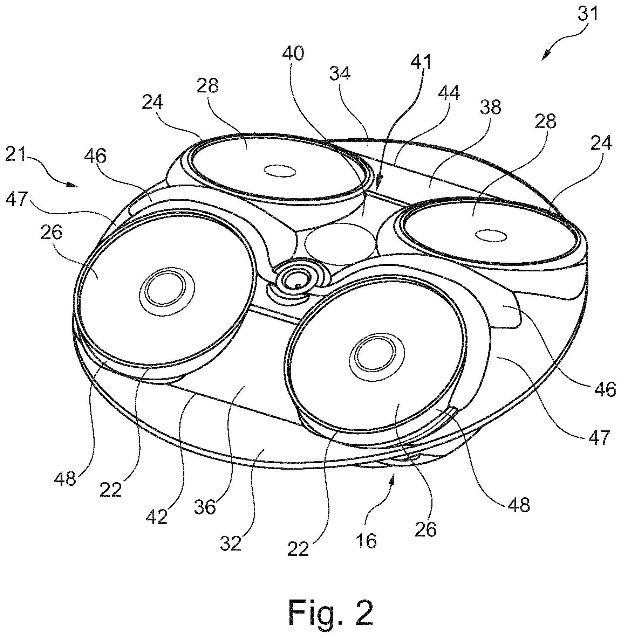

Figur 2 zeigt ein Brennraumvolumen 31 eines erfindungsgemäßen Verbrennungsmotors 10 in einem Zustand, in dem sich der Kolben 16 im oberen Maximalpunkt befindet. Das Brennraumvolumen 31 wird durch den Zylinderkopf 14, insbesondere dessen Brennraumdach 21, zusammen mit dem Zylinder 12 und dem Kolben 16 begrenzt.

Somit zeigt Figur 2 im Wesentlichen einen Negativabdruck des Zylinderkopfes 14, insbesondere dessen Brennraumdach 21, und des Kolbens 16.

Der Zylinderkopf 14, insbesondere das Brennraumdach 21, hat in einer Draufsicht eine runde Außengeometrie und weist im Wesentlichen fünf zueinander abgewinkelte Flächen 32, 34, 36, 38, 40 auf. Die Flächen 38, 40 und 36, 40 sind jeweils abgerundet zueinander, um scharfe Kanten in einem aktiven Bereich 41 des Brennraumdachs 21 an den entsprechenden Übergängen der Flächen 36 - 40 zu vermeiden. Der aktive Bereich 41 des Brennraumdachs 21 umfasst vorzugsweise unter anderem die Flächen 36, 38, 40.

Bei den seitlich am Zylinderkopf 14 angeordneten Flächen 32, 34 handelt es sich jeweils um eine Quetschfläche. Die Form der Quetschflächen 32, 34 entspricht der Form eines Kreisabschnitts, wobei die Quetschflächen 32, 34 jeweils durch einen von zwei parallel zueinander verlaufenden Übergängen 42, 44 nach (radial) innen begrenzt sind, wohingegen der Außenrand einer Zylinderlaufbahn die Quetschflächen 32, 34 nach (radial) außen begrenzt. Die beiden Quetschflächen 32, 34 sind demnach in gegenüberliegenden Randabschnitten des Zylinderkopfes 14 angeordnet.

Die Übergänge 42, 44 sind jeweils zwischen den Quetschflächen 32, 34 und den anschließenden Flächen 36, 38 vorgesehen, die sich ausgehend von den Quetschflächen 32, 34 zum Mittelpunkt des Zylinderkopfes 14 erstrecken und Teil des aktiven Bereichs 41 sind. Die Übergänge 42, 44 weisen einen unterschiedlichen Abstand zum Mittelpunkt des Zylinderkopfes 14 auf.

In der gezeigten Ausführungsform ist die der Einlassseite, also den Einlassventilen 26, zugeordnete Quetschfläche 32 flächenmäßig größer als die der Auslassseite zugeordnete Quetschfläche 34, also die den Auslassventilen 28 zugeordnete Quetschfläche 34.

Zwischen den Ventilsitzen 22, 24, insbesondere zwischen jeweils einem Ventilsitz 22 für ein Einlassventil 26 und einem Ventilsitz 24 für ein Auslassventil 28, sind jeweils im Zylinderkopf 14 gewölbte Abschnitte 46, 47 angeordnet. Die gewölbten Abschnitte 46, 47 sind ebenfalls Teil des aktiven Bereichs 41 des Brennraumdachs 21, wobei sie derart gewölbt sind, dass ihre Wölbung vom Brennraum 20 wegweist.

Durch die gewölbten Abschnitte 46, 47, insbesondere ihre Wölbung, kann das Brennraumdach 21 eine im Wesentlichen halbkugelförmige Geometrie aufweisen. Dadurch wird eine Flammenausbreitung im Brennraum 20 begünstigt, was wiederum zu einer thermodynamisch optimalen Verbrennung führt, wie nachfolgend noch erläutert wird.

Der Zylinderkopf 14, insbesondere das Brennraumdach 21, weist insgesamt vier Ventilsitze 22, 24 für zwei Einlassventile 26 und zwei Auslassventile 28 auf. Im Brennraumdach 21 ist angrenzend an den Ventilsitz 22 der Einlassventile 26 jeweils eine Maskierung 48 parallel zur Ventilachse angeordnet, welche eine Höhe zwischen 2 mm und 3,5 mm aufweist. Die Maskierung 48 sorgt für eine hohe Tumble-Bewegung des über die Einlassventile 26 einströmenden Gemischs, was zu einer Erhöhung der turbulenten kinetischen Energie des Gemisches und damit zu einer gesteigerten Brenngeschwindigkeit und einer optimierten Flammenausbreitung führt.

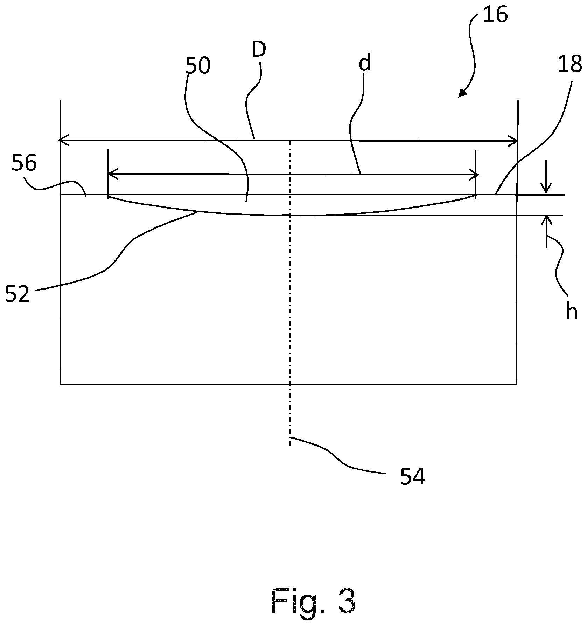

Figur 3 zeigt einen Kolben 16 in einer Schnittansicht, der beispielsweise in einem Druckgussverfahren hergestellt worden ist.

An der Brennraumseite 18 des Kolbens 16, die zusammen mit dem Zylinder 12 und dem Zylinderkopf 14, insbesondere dem Brennraumdach 21, den Brennraum 20 des Verbrennungsmotors 10 begrenzt, ist eine Vertiefung 50 eingebracht, die rotationssymmetrisch und linsenförmig ist. Die Vertiefung 50 weist eine Bodenfläche 52 sowie eine Höhe h zwischen 0,5 mm und 8 mm auf. Die Vertiefung 50 des Kolbens 16 ist rotationssymmetrisch bezüglich einer Längsachse 54 ausgebildet.

Die Wölbung der Vertiefung 50 entspricht beispielsweise im Wesentlichen der Wölbung der gewölbten Abschnitte 46, 47 des Zylinderkopfes 14, wobei sie entgegengesetzt ausgerichtet ist. Dadurch kann der Brennraum 20 möglichst symmetrisch ausgebildet sein. Durch das Zusammenspiel des aktiven Bereichs 41, insbesondere der gewölbten Abschnitte 46, 47 und der linsenförmigen Vertiefung 50 ist der Brennraum 20 annähernd kugelförmig, was optimal hinsichtlich der Verbrennung ist.

Der beim Einströmen des Gemisches erzeugte Tumble wird aufgrund dieser Geometrie des Brennraums 20 unterstützt und aufrechterhalten.

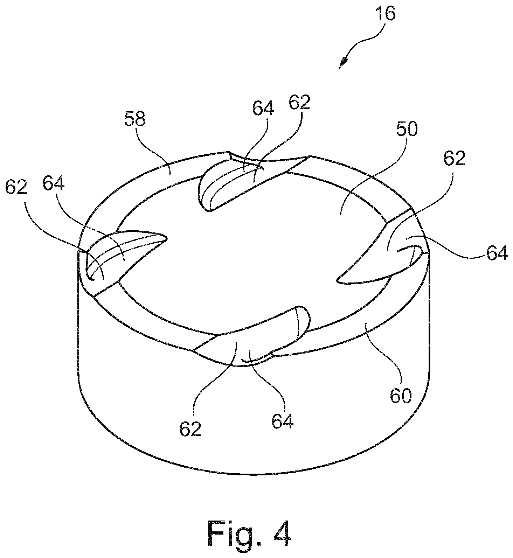

Der Durchmesser d der Vertiefung 50 ist kleiner als der Gesamtdurchmesser D des Kolbens 16, wodurch ein umlaufener Steg 56 gebildet wird, der die Vertiefung 50 radial umgibt. Ein Teil des umlaufenden Stegs 56 bildet Kolbenquetschflächen 58, 60 des Kolbens 16, die in Zusammenhang mit Figur 4 näher beschrieben werden. Der Gesamtdurchmesser D des Kolbens 16 entspricht näherungsweise dem Innendurchmesser des Zylinders 12.

Generell lässt sich (zusätzlich) über die Tiefe der Vertiefung 50 das Verdichtungsverhältnis des Verbrennungsmotors 10 einstellen, sofern die mechanischen Randbedingungen bzw. Begrenzungen berücksichtigt werden, beispielsweise hinsichtlich der Stabilität des Kolbens 16.

Figur 4 zeigt den Kolben 16 in einer Perspektivansicht. Aus dieser Ansicht geht hervor, dass der Kolben 16 zusätzlich zu der in Figur 3 bereits erkennbaren Vertiefung 50 als Ventiltaschen ausgebildete Aussparungen 62 aufweist. Die Aussparungen 62 dienen als eine mechanische Sicherung 64, um eine Kollision der Ventile 26, 28 mit dem Kolben 16 zu vermeiden.

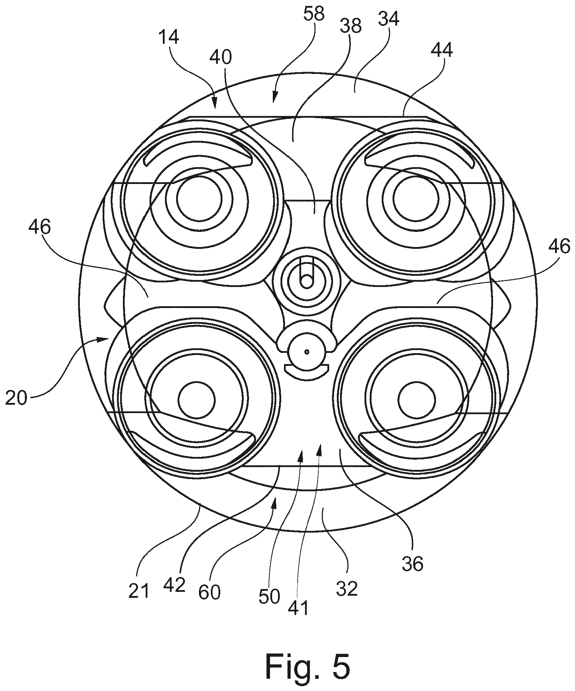

Figur 5 zeigt den Brennraum 20, insbesondere das Brennraumvolumen 21 in einer Draufsicht, wobei der Kolben 16 transparent dargestellt ist.

Die Kolbenquetschflächen 58, 60 sind an der der Auslassseite zugeordneten Quetschfläche 34 des Zylinderkopfes 14 ausgerichtet, insbesondere überdecken die Kolbenquetschflächen 58, 60 die Quetschflächen 32, 34 des Zylinderkopfes 14 zumindest teilweise. In einer alternativen Ausführungsform können die Kolbenquetschflächen 58, 60 flächenmäßig kleiner sein als die Quetschflächen 32, 24 des Zylinderkopfes 14.

Wie bereits erläutert, werden sowohl der erzeugte Tumble als auch die turbulente kinetische Energie des eingesaugten Gemisches aufgrund der Geometrie des Brennraums 20 möglichst lange aufrechterhalten, wodurch sich eine hohe Brenngeschwindigkeit erreichen lässt, sodass sich eine von der Zündkerze 30 ausgehende Initialflamme schnell im Gemisch ausbreiten kann. Hierdurch steigt die Effizienz des Verbrennungsmotors 10 entsprechend.

Die hierfür notwendige Geometrie des Brennraums 20 wird unter anderem durch den im Wesentlichen kantenfrei ausgebildeten aktiven Bereich 41 des Brennraumdachs 21 erreicht, der mit der Vertiefung 50 im Kolben 16 zusammenwirkt.

Um das Brennraumdach 21 derart auszubilden, ist dieses (ausschließlich) spanend bearbeitet.

## Patentansprüche

1. Verbrennungsmotor (10) für ein Kraftfahrzeug, mit wenigstens einem Zylinder (12), einem Zylinderkopf (14) und einem in dem Zylinder (12) beweglich gelagerten Kolben (16), der eine Brennraumseite (18) hat, die mit dem Zylinderkopf (14) und dem Zylinder (12) einen Brennraum (20) begrenzt, wobei der Zylinderkopf (14) ein Brennraumdach (21) aufweist, in dem mindestens zwei Ventilsitze (22, 24) für mindestens ein Einlassventil (26) und mindestens ein Auslassventil (28) vorgesehen sind, und wobei das Brennraumdach (21) zwei zwischen jeweils einem Ventilsitz (22) für ein Einlassventil (26) und einem Ventilsitz (24) für ein Auslassventil (28) angeordnete, vom Brennraum (20) weg gerichtete, gewölbte Zylinderkopfabschnitte (46, 47) aufweist, wobei der Zylinderkopf (14) lediglich an zwei sich gegenüberliegenden Randabschnitten Quetschflächen (32, 34) in Form von Kreisflächenabschnitten aufweist, **dadurch gekennzeichnet, dass** die Quetschflächen jeweils durch eine von zwei parallel zueinander verlaufenden Übergängen (42, 44) im Zylinderkopf (14) begrenzt werden, wobei die Quetschflächen (32, 34) einer Einlassseite und einer Auslassseite des Zylinderkopfs (14) zugeordnet sind, wobei die der Einlassseite zugeordnete Quetschfläche (32) eine größere Fläche aufweist als die der Auslassseite zugeordnete Quetschfläche (34).

2. Verbrennungsmotor (10) nach Anspruch 1, **dadurch gekennzeichnet, dass** ein aktiver Bereich (41) des Brennraumdachs (21) im Wesentlichen kantenfrei ausgebildet ist.

3. Verbrennungsmotor (10) nach einem der vorhergehenden Ansprüche, **dadurch gekennzeichnet, dass** das Brennraumdach (21) vollständig spanend hergestellt worden ist.

4. Verbrennungsmotor (10) nach einem der vorherigen Ansprüche, **dadurch gekennzeichnet, dass** der Kolben (16) eine zu einer Kolbenachse (54) rotationssymmetrische, insbesondere linsenförmige, Vertiefung (50) aufweist, wobei ein Durchmesser (d) der Vertiefung (50) kleiner ist als ein Gesamtdurchmesser (D) des Kolbens (16).

5. Verbrennungsmotor (10) nach Anspruch 4, **dadurch gekennzeichnet, dass** die Vertiefung (50) in ihrem Mittelpunkt eine Tiefe zwischen 0,2 mm und 10 mm aufweist, insbesondere zwischen 0,5 mm und 8 mm.

6. Verbrennungsmotor (10) nach einem der Ansprüche 4 bis 5, **dadurch gekennzeichnet, dass** die Vertiefung (50) zusammen mit dem Brennraumdach (21), insbesondere mit dem aktiven Bereich (41) des Brennraumdachs (21), ein annähernd kugelförmiges Volumen einschließt.

7. Verbrennungsmotor (10) nach einem der vorhergehenden Ansprüche, **dadurch gekennzeichnet, dass** im Brennraumdach (21) neben einem Ventilsitz (22) eine Maskierung (48) parallel zur Ventilachse des Einlassventils (26) angeordnet ist, die eine Höhe zwischen 2 mm und 3,5 mm aufweist.

8. Verbrennungsmotor (10) nach einem der vorhergehenden Ansprüche, **dadurch gekennzeichnet, dass** zwei gewölbte Zylinderkopfabschnitte (46, 47) vorgesehen sind, die jeweils zwischen zwei Ventilsitzen (22, 24) angeordnet sind, die einem Einlassventil (26) und ein Auslassventil (28) zugeordnet sind.

## Claims

1. Internal combustion engine (10) for a motor vehicle, having at least one cylinder (12), a cylinder head (14) and a piston (16) which is mounted movably in the cylinder (12) and has a combustion chamber side (18) which delimits a combustion chamber (20) with the cylinder head (14) and the cylinder (12), the cylinder head (14) having a combustion chamber roof (21), in which at least two valve seats (22, 24) for at least one inlet valve (26) and at least one outlet valve (28) are provided, and the combustion chamber roof (21) having two domed cylinder head sections (46, 47) which are arranged between in each case a valve seat (22) for an inlet valve (26) and a valve seat (24) for an outlet valve (28) and are directed away from the combustion chamber (20), the cylinder head (14) having squish faces (32, 34) in the form of circular face sections merely on two edge sections which lie opposite one another, **characterized in that** the squish faces are delimited in each case by way of one of two transitions (42, 44) in the cylinder head (14) which run parallel to one another, the squish faces (32, 34) being assigned to an inlet side and an outlet side of the cylinder head (14), the squish face (32) which is assigned to the inlet side having a greater area than the squish face (34) which is assigned to the outlet side.

2. Internal combustion engine (10) according to Claim 1, **characterized in that** an active region (41) of the combustion chamber roof (21) is of substantially edge-free configuration.

3. Internal combustion engine (10) according to either of the preceding claims, **characterized in that** the combustion chamber roof (21) has been produced completely by machining.

4. Internal combustion engine (10) according to any one of the preceding claims, **characterized in that** the piston (16) has a depression (50) which is, in particular, lenticular and is rotationally symmetrical with respect to a piston axis (54), a diameter (d) of the depression (50) being smaller than an overall diameter (D) of the piston (16).

5. Internal combustion engine (10) according to Claim 4, **characterized in that**, at its centre point, the depression (50) has a depth of between 0.2 mm and 10 mm, in particular of between 0.5 mm and 8 mm.

6. Internal combustion engine (10) according to either of Claims 4 and 5, **characterized in that** the depression (50) encloses an approximately spherical volume together with the combustion chamber roof (21), in particular with the active region (41) of the combustion chamber roof (21) .

7. Internal combustion engine (10) according to any one of the preceding claims, **characterized in that** a masking (48) is arranged parallel to the valve axis of the inlet valve (26) in the combustion chamber roof (21) next to a valve seat (22), which masking (48) has a height of between 2 mm and 3.5 mm.

8. Internal combustion engine (10) according to any one of the preceding claims, **characterized in that** two domed cylinder head sections (46, 47) are provided which are arranged in each case between two valve seats (22, 24) which are assigned to an inlet valve (26) and an outlet valve (28).

## Revendications

1. Moteur à combustion interne (10) pour un véhicule automobile, avec au moins un cylindre (12), une culasse (14) et un piston (16) monté de manière mobile dans le cylindre (12), qui a un côté de chambre de combustion (18) qui délimite avec la culasse (14) et le cylindre (12) une chambre de combustion (20), la culasse (14) présentant un toit de chambre de combustion (21), dans lequel sont prévus au moins deux sièges de soupape (22, 24) pour au moins une soupape d'admission (26) et au moins une soupape d'échappement (28), et le toit de chambre de combustion (21) présentant deux sections de culasse bombées (46, 47) orientées à l'opposé de la chambre de combustion (20), agencées entre respectivement un siège de soupape (22) pour une soupape d'admission (26) et un siège de soupape (24) pour une soupape d'échappement (28), la culasse (14) présentant des surfaces d'écrasement (32, 34) sous forme de sections de surface circulaire uniquement sur deux sections de bord opposées, **caractérisé en ce que** les surfaces d'écrasement sont respectivement délimitées par l'une de deux transitions (42, 44) dans la culasse (14) s'étendant parallèlement l'une à l'autre, les surfaces d'écrasement (32, 34) étant associées à un côté d'admission et à un côté d'échappement de la culasse (14), la surface d'écrasement (32) associée au côté d'admission présentant une surface plus grande que la surface d'écrasement (34) associée au côté d'échappement.

2. Moteur à combustion interne (10) selon la revendication 1, **caractérisé en ce qu'**une zone active (41) du toit de chambre de combustion (21) est réalisée essentiellement sans arêtes.

3. Moteur à combustion interne (10) selon l'une quelconque des revendications précédentes, **caractérisé en ce que** le toit de chambre de combustion (21) a été entièrement fabriqué par usinage par enlèvement de copeaux.

4. Moteur à combustion interne (10) selon l'une quelconque des revendications précédentes, **caractérisé en ce que** le piston (16) présente un renfoncement (50) à symétrie de rotation par rapport à un axe de piston (54), notamment en forme de lentille, un diamètre (d) du renfoncement (50) étant inférieur à un diamètre total (D) du piston (16).

5. Moteur à combustion interne (10) selon la revendication 4, **caractérisé en ce que** le renfoncement (50) présente en son centre une profondeur comprise entre 0,2 mm et 10 mm, notamment entre 0,5 mm et 8 mm.

6. Moteur à combustion interne (10) selon l'une quelconque des revendications 4 à 5, **caractérisé en ce que** le renfoncement (50) entoure conjointement avec le toit de chambre de combustion (21), notamment avec la zone active (41) du toit de chambre de combustion (21), un volume approximativement sphérique.

7. Moteur à combustion interne (10) selon l'une quelconque des revendications précédentes, **caractérisé en ce que** dans le toit de chambre de combustion (21), à côté d'un siège de soupape (22), est agencé un masquage (48) parallèle à l'axe de soupape de la soupape d'admission (26), qui présente une hauteur comprise entre 2 mm et 3,5 mm.

8. Moteur à combustion interne (10) selon l'une quelconque des revendications précédentes, **caractérisé en ce que** deux sections de culasse bombées (46, 47) sont prévues, chacune étant agencée entre deux sièges de soupape (22, 24) associés à une soupape d'admission (26) et une soupape d'échappement (28).
